# EUROPÄISCHE PATENTSCHRIFT

(11) **EP 2 066 198 B1**
(45) Veröffentlichungstag und Bekanntmachung des Hinweises auf die Patenterteilung: **04.08.2010**
(21) Anmeldenummer: 07817573.4
(22) Anmeldetag: 25.09.2007
(51) Int. Cl.: A47B 96/14, A47F 5/10

(54) **PRÄSENTATIONSANORDNUNG**
DISPLAY ARRANGEMENT
AGENCEMENT DE PRÉSENTATION

(30) Priorität: 26.09.2006 DE 102006045225
(43) Veröffentlichungstag der Anmeldung: 10.06.2009
(73) Patentinhaber: Göpfert, Christin, 99094 Erfurt (DE); Göpfert, Janine, 99094 Erfurt (DE)
(72) Erfinder: GÖPFERT, Joachim, 99094 Erfurt (DE)
(74) Vertreter: Liedtke, Klaus
(86) Internationale Anmeldenummer: PCT/DE2007/001731
(87) Internationale Veröffentlichungsnummer: WO 2008/040314

(56) Entgegenhaltungen:
- WO-A-03/087488

## Beschreibung

Die Erfindung betrifft eine Präsentationsanordnung, wie sie insbesondere bei der Ausstattung von Ladengeschäften wie beispielsweise Friseursalons oder im Messebau zum Einsatz kommt.

Solche Präsentationsanordnungen dienen teils dekorativen Zwecken, teils Aufbewahrungs- und Präsentationszwecken oder dem Teilen von Räumen. Aus der WO 03/087488 ist ein Wandelement mit einem Grundgestell bekannt, das von einem umlaufenden Rahmen gebildet wird, an dem senkrechte Wandflächen mit flächenhaften Verkleidungselementen und waagerechte Trägerelemente angeordnet sind. An den inneren Flächen des Rahmens sind Aufnahmeschienen angeordnet, an denen von außen nicht sichtbare Verbindungseinrichtungen lösbar befestigt sind. An den Verbindungseinrichtungen sind rechtwinklig zur Wand Trägerelemente mittels einer Klemmverbindung angeordnet. Die senkrechten Schenkel des Rahmens und den Rahmen verdeckende Verkleidungsteile sind mit U-förmigen Abdeckprofilen verdeckt. Nachteilig ist hier eine vergleichsweise hohe Zahl von Bauteilen mit entsprechend hohem Montageaufwand.

Der Erfindung liegt die Aufgabe zu Grunde, eine verbesserte Präsentationsanordnung anzugeben.

Die Aufgabe wird erfindungsgemäß gelöst durch eine Präsentationsanordnung mit den Merkmalen des Anspruchs 1.

Vorteilhafte Ausgestaltungen der Erfindung sind Gegenstand der Unteransprüche. Eine erfindungsgemäße Präsentationsanordnung umfasst mindestens ein ein- oder mehrteiliges Profil, mindestens ein im Wesentlichen horizontal ausgerichtetes flächiges Regalelement und mindestens ein Konsolenelement. Jedes der Profile weist zumindest einen Mittelsteg und daran angeordnet zwei einander parallele innere Flansche auf. Mindestens eines der Profile ist vertikal ausgerichtet. Das Konsolenelement ist aus einem Oberteil und einem Unterteil gebildet, die mittels mindestens einer Spannschraube gegeneinander ziehbar sind und jeweils eine Spannfläche aufweisen. Die Spannflächen liegen einander im Wesentlichen parallel. Das Oberteil und/oder das Unterteil sind mit Klemmschienen und/oder Klemmschienensegmenten versehen, die kraftschlüssig und lösbar durch Aufstecken auf die inneren Flansche oder durch Einstecken zwischen die inneren Flansche mit diesen verbindbar sind. Jedes Regalelement ist zwischen den Spannflächen mindestens eines Konsolenelementes kraftschlüssig durch Anziehen der Spannschraube oder der Spannschrauben fixierbar. Die Regalelemente haben beispielsweise die Form von Glasböden, insbesondere aus Sicherheitsglas. Die freie Verstellbarkeit der Höhe der Konsolenelemente sowie deren einfache und sichere Montage wird durch die kraftschlüssige Aufsteckbarkeit der Klemmschienen oder Klemmschienensegmente auf die inneren Flansche sichergestellt. Sofern sie auf die inneren Flansche aufgesteckt werden, sind die Klemmschienen insbesondere paarweise mit einem Abstand zueinander angeordnet, der in etwa dem Abstand der Außenflächen der inneren Flansche entspricht oder geringfügig kleiner ist, damit sich ein Kraftschluss infolge elastischer Verformung der Klemmschienen und/oder der inneren Flansche ergibt. Werden die Klemmschienen oder Klemmschienensegmente hingegen zwischen die inneren Flansche eingesteckt, entspricht der Abstand ihrer Außenflächen in etwa dem Abstand der Innenflächen der inneren Flansche oder ist geringfügig größer. Unter Klemmschienensegmenten sollen unterbrochene Klemmschienen verstanden werden. Insbesondere sind die Klemmschienensegmente an einem der inneren Flansche zu den Klemmschienensegmenten an dem anderen der inneren Flansche in Längsrichtung des Profils versetzt, da sie so einfacher und materialsparender herzustellen sind als durchgehende Klemmschienen, insbesondere wenn das Konsolenelement gegossen ist. Sowohl die Klemmschienen oder Klemmschienensegmente als auch die inneren Flansche können Kanten aufweisen, die so gebrochen sind, dass das Zusammenstecken erleichtert wird. Der zweiteilige Aufbau des Konsolenelementes, insbesondere mit zwei Klemmschrauben, ermöglicht eine gleichmäßige Verteilung der Presskräfte beim Einspannen des Regalelementes über die eingespannte Fläche. Das Regalelement weist in diesem Bereich für die Klemmschrauben entsprechende Bohrungen oder Schlitze auf. Außerdem ermöglicht der zweiteilige Aufbau eine Montage von unten nach oben, wenn ein seitliches Einführen der Regalelemente in die Konsolenelemente nicht möglich ist. Eine weitere bevorzugte Präsentationsanordnung umfasst einen Rahmen, der zumindest aus vier umlaufenden, jeweils einteilig gebildeten Profilen, insbesondere Strangpressprofilen, gebildet ist und an dem mindestens ein senkrechtes flächenhaftes Verkleidungselement angeordnet ist. Jedes der Profile weist zumindest einen senkrecht zu einer vom Rahmen eingeschlossenen Ebene ausgerichteten Mittelsteg, zwei zu einer Außenseite des Rahmens gerichtete, einander parallele äußere Flansche und zwei zu einer Innenseite des Rahmens gerichtete, einander parallele innere Flansche auf, wobei der Abstand zwischen den inneren Flanschen geringer ist als der Abstand zwischen den äußeren Flanschen. Jedes Verkleidungselement liegt auf einer Außenseite eines der äußeren Flansche mindestens zweier Profile auf. Das Verkleidungselemente kann beispielsweise die Form nicht transparenter, mit Dekors oder Texturen versehener Glasscheiben aufweisen. Mit geringem Aufwand lassen sich so Präsentationsflächen, Werbeträger, Trennwände und dergleichen erstellen. Die einteilige Bildung der Profile verringert den Montageaufwand erheblich.

Auch bei dieser Präsentationsanordnung ist mindestens ein waagerechtes Regalelement vorgesehen, das jeweils von mindestens einem Konsolenelement gehalten wird, wobei das Konsolenelement, wie oben beschrieben, zweiteilig ausgebildet ist. Das Konsolenelement ist an den inneren Flanschen mindestens eines von zwei einander gegenüberliegenden, im wesentlichen senkrecht ausgerichteten Profilen höhenverstellbar angeordnet und weist zwei einander im Wesentlichen parallel liegende Spannflächen und eine Führung mit Klemmschienen oder Klemmschienensegmenten auf, die kraftschlüssig und lösbar durch Aufstecken auf die inneren Flansche oder durch Einstecken zwischen die inneren Flansche mit diesen verbindbar sind. Jedes Regalelement ist zwischen den Spannflächen mindestens eines Konsolenelements kraftschlüssig fixierbar. Insbesondere ist das Konsolenelement so bemessen, dass es nicht über die Außenseiten der äußeren Flansche hinausragt, um das Aufliegen der Verkleidungselemente nicht zu behindern. Oberhalb und unterhalb jedes Regalelementes schließt vorzugsweise je ein Verkleidungselement bündig an das Regalelement an. Auf diese Weise ist die Befestigung des Regalelementes in der Spanneinrichtung verdeckt, so dass der ästhetische Gesamteindruck nur von der Gestaltung der Regalelemente, beispielsweise in Form von Glasböden, insbesondere aus Sicherheitsglas, und der Verkleidungselemente, beispielsweise in Form nicht transparenter, mit Dekors oder Texturen versehener Glasscheiben bestimmt wird. Die freie Verstellbarkeit der Höhe der Konsolenelemente sowie deren einfache und sichere Montage wird durch die kraftschlüssige Aufsteckbarkeit der Klemmschienen oder Klemmschienensegmente auf die inneren Flansche sichergestellt. Sofern sie auf die inneren Flansche aufgesteckt werden, sind die Klemmschienen insbesondere paarweise mit einem Abstand zueinander angeordnet, der in etwa dem Abstand der Außenflächen der inneren Flansche entspricht oder geringfügig kleiner ist, damit sich ein Kraftschluss infolge elastischer Verformung der Klemmschienen und/oder der inneren Flansche ergibt. Werden die Klemmschienen oder Klemmschienensegmente hingegen zwischen die inneren Flansche eingesteckt, entspricht der Abstand ihrer Außenflächen in etwa dem Abstand der Innenflächen der inneren Flansche oder ist geringfügig größer. Unter Klemmschienensegmenten sollen unterbrochene Klemmschienen verstanden werden. Insbesondere sind die Klemmschienensegmente an einem der inneren Flansche zu den Klemmschienensegmenten an dem anderen der inneren Flansche in Längsrichtung des Profils versetzt. Sowohl die Klemmschienen oder Klemmschienensegmente als auch die inneren Flansche können Kanten aufweisen, die so gebrochen sind, dass das Zusammenstecken erleichtert wird.

Das Konsolenelement ist aus einem Oberteil und einem Unterteil gebildet, die mittels mindestens einer Spannschraube gegeneinander ziehbar sind und jeweils eine Spannfläche aufweisen, wobei das Oberteil und/oder das Unterteil mit Klemmschienen und/oder Klemmschienensegmenten versehen sind. Das Regalelement ist durch Anziehen der Spannschraube oder der Spannschrauben fixierbar. Der zweiteilige Aufbau des Konsolenelementes, insbesondere mit zwei Klemmschrauben, ermöglicht eine gleichmäßige Verteilung der Presskräfte beim Einspannen des Regalelementes über die eingespannte Fläche. Das Regalelement weist in diesem Bereich für die Klemmschrauben entsprechende Bohrungen oder Schlitze auf.

Das Konsolenelement ist aus einem Oberteil und einem Unterteil gebildet, die mittels mindestens einer Spannschraube, insbesondere zwei Spannschrauben, gegeneinander ziehbar sind. Die Spanneinrichtung ist durch gegeneinander gerichtete horizontale Flächen des Oberteils und des Unterteils und durch die Spannschrauben gebildet. Insbesondere bei der Verwendung von Glasböden als Regalelemente können zwischen dem Regalelement und dem Unterteil bzw. dem Oberteil elastische Lagen zur Druckverteilung vorgesehen sein, um Punktbelastungen des Regalelements zu vermeiden. Das Regalelement weist Bohrungen oder vorzugsweise Schlitze für die Spannschrauben auf, so dass es seitlich in die noch nicht verspannte Spanneinrichtung einführbar ist, ohne dass die Spannschrauben herausgedreht werden müssen. Das Oberteil und/oder das Unterteil ist mit Klemmschienen und/oder Klemmschienensegmenten versehen, so dass beide mit dem Profil kraftschlüssig verbindbar sind. Das Oberteil und/oder das Unterteil können einen Anschlag in einem dem Profil benachbarten Bereich aufweisen, mit dem ein Mindestabstand zwischen den horizontalen Flächen des Oberteils und des Unterteils so vorgegeben werden kann, dass das Regalelement beim Spannen nicht beschädigt wird.

Vorzugsweise weist das Konsolenelement bzw. das Oberteil und/oder das Unterteil mindestens eine Nase auf, die zumindest dann formschlüssig zwischen den inneren Flanschen oder den Befestigungsstegen liegt, wenn das Konsolenelement maximal in Richtung der inneren Flansche gedrückt ist. Insbesondere weist das Konsolenelement an einem oberen und einem unteren Ende jeweils eine Nase auf. Bei Verwendung eines Konsolenelementes mit einem Oberteil und einem Unterteil weisen Oberteil und Unterteil bevorzugt jeweils eine Spreiznasen an ihrem jeweiligen oberen und unteren Ende auf. Durch den verbesserten Formschluss wird eine erhöhte Sicherheit der Verbindung des Konsolenelements mit dem Profil erreicht.

In einer bevorzugten Ausführungsform ist das Konsolenelement mittels mindestens einer Sicherungsschraube am Profil fixierbar. Die Sicherungsschraube gibt eine zusätzliche Sicherheit gegenüber dem Herausrutschen des Konsolenelementes aus den inneren Flanschen. Außerdem erleichtert sie das vollständige Andrücken des Konsolenelementes an die inneren Flansche, so dass die Nasen zwischen die inneren Flansche gedrückt werden.

Vorzugsweise weist jeder der inneren Flansche an seiner Kante parallel zum Mittelsteg jeweils einen Befestigungssteg auf, der zum jeweils anderen der inneren Flansche weist. Dieser Befestigungssteg, der Teil des inneren Flansches ist, eignet sich beispielsweise, um eine Gegenmutter zur Sicherungsschraube zu halten, so dass die Sicherungsschraube besonders einfach befestigt werden kann. Im Falle eines zwischen den inneren Flanschen gehaltenen Konsolenelements werden dessen Klemmschienen oder Klemmschienensegmente zwischen den Befestigungsstegen verklemmt.

In einer bevorzugten Ausführungsform ist zwischen benachbarten Enden zweier Profile ein Eckverbinder vorgesehen, der ohne oder mit geringem Spiel in je einen Abschnitt eines vom Mittelsteg, den beiden inneren Flanschen und den beiden Befestigungsstegen umgrenzten Raumes beider Profile vom Ende her so einführbar ist, dass die Profile rechtwinklig zueinander stehen. Er kann in der Art zweier rechtwinklig an jeweils einem Ende aufeinander stehender Quader gebildet sein, die jeweils so bemessen sind, dass sie ohne oder mit geringem Spiel in einen Abschnitt eines vom Mittelsteg, den beiden inneren Flanschen und den beiden Befestigungsstegen umgrenzten Raumes vom Ende des Profils her einführbar sind. Auf diese Weise sind die Enden zweier Profile mit geringstem Montageaufwand miteinander verbindbar. Die Enden der Profile sind hierzu vorzugsweise in der Art eines Gehrungsschnittes mit 45° Schnittwinkel ausgeführt.

Der Eckverbinder weist vorzugsweise mindestens ein Gewinde auf und ist mittels einer durch eine erste Bohrung im Mittelsteg in das Gewinde gedrehten Madenschraube gegen Verrutschen sicherbar, so dass die Eckverbindung besonders sicher ist.

In einer besonders bevorzugten Ausführungsform weist jeder der äußeren Flansche an seiner Kante parallel zum Mittelsteg jeweils einen Sichtsteg auf, der zum jeweils anderen der äußeren Flansche und/oder vom jeweils anderen der äußeren Flansche weg weist. Weist der Sichtsteg des äußeren Flansches, an dessen Außenseite das Verkleidungselement anliegt, einen vom anderen äußeren Flansch weg weisenden Sichtsteg auf, so ist das Verkleidungselement in dieser Richtung gegen seitliches Herausrutschen gesichert. Ein an zwei gegenüberliegenden Profilen so gesichertes Verkleidungselement, das oben und unten bündig an jeweils ein Regalelement grenzt, ist damit vollständig gegen Herausrutschen oder Herausfallen gesichert.

Vorzugsweise sind parallel zu den inneren Flanschen zwei Hilfsflansche an der Innenseite des Profils so angeordnet, dass die inneren Flansche zwischen den Hilfsflanschen liegen. Der Abstand zwischen den Hilfsflansche ist größer als der Abstand zwischen den inneren Flanschen und kleiner als der Abstand zwischen den äußeren Flanschen. Das Verkleidungselement ist mittels zumindest einer Montagehilfsbefestigung an einem der Hilfsflansche zumindest eines Profils lösbar fixierbar. Die Montagehilfsbefestigung erleichtert zum einen die Montage des Verkleidungselements, beispielsweise, wenn zuvor erst eines der Regalelemente montiert wurde, so dass das Verkleidungselement noch nicht selbst am Rahmen hält. Andererseits sichert die Montagehilfsbefestigung das Verkleidungselement zusätzlich im montierten Zustand, insbesondere bei Verkleidungselementen, die oben oder unten nicht an ein Regalelement sondern an einen Sichtsteg grenzen. Auf diese Weise bleiben auch Maßtoleranzen bei der Fertigung oder Montage der Teile der Präsentationsanordnung ohne Konsequenzen für die Sicherheit der Verkleidungselemente gegen Herausfallen.

Die Montagehilfsbefestigung ist bevorzugt als Klettverschluss aus zwei aneinander haftenden Streifen ausgebildet, wobei der erste Streifen auf einem Hilfsflansch und der zweite Streifen auf einer Rückseite des Verkleidungselements angeordnet, insbesondere angeklebt, sind. Klettverschlüsse stellen eine besonders einfache und kostengünstige Verbindungsmöglichkeit dar.

Vorzugsweise ist zumindest eines der Profile mittels eines Wandmontageelementes an einer Wand fixierbar, wobei das Wandmontageelement eine Platte mit mindestens einer zweiten Bohrung oder mindestens einem Langloch zur Befestigung an der Wand und eine Klammer aufweist und die Platte an einer Außenseite eines der äußeren Flansche anliegt und wobei die mit der Platte fest oder insbesondere verstellbar verbundene Klammer zwischen einen der inneren Flansche und einen der Hilfsflansche oder zwischen die Hilfsflansche so greift, dass das Profil gegen Verrutschen in Richtung seiner Innenseite und in Normalrichtung der vom Rahmen eingeschlossenen Ebene gesichert ist. Insbesondere sind an zwei gegenüberliegenden senkrecht angeordneten Profilen jeweils mindestens ein Wandmontageelement, insbesondere zwei Wandmontageelemente vorgesehen, womit die Präsentationsanordnung nach zwei Seiten gesichert ist. Wandmontageelemente können auch an einem unteren und/oder einem oberen Profil vorgesehen sein, um die Präsentationsanordnung in einer bestimmten Höhe anzuordnen.

Bevorzugt ist mindestens ein Befestigungselement zur Befestigung des Verkleidungselements an mindestens einem der Profile vorgesehen.

In einer Ausführungsform kann dieses Befestigungselement die Form einer Halteklammer aufweisen, die auf der Rückseite des Verkleidungselements angeordnet, insbesondere angeklebt ist. Die Halteklammer weist ein elastisches Rastelement auf, das hinter einem der inneren Stege oder hinter einem der Hilfsstege so einrastet, dass das Verkleidungselement gegen Herausfallen in Richtung seiner Vorderseite gesichert ist. Insbesondere die Anordnung mehrerer Halteklammern zwischen den Verkleidungselementen und den Profilen, an denen sie anliegen, bietet eine zusätzliche Sicherheit gegen das Herauskippen von Verkleidungselementen.

Ein alternatives oder zusätzliches Befestigungselement ist eine Sicherungsplatte, die auf der Rückseite des Verkleidungselements angeordnet, insbesondere angeklebt ist. Sie weist eine Sicherungslasche auf, in die die Madenschraube eines der Eckverbinder oder eine andere Schraube so drehbar ist, dass das Verkleidungselement gegen Herausfallen in Richtung seiner Vorderseite gesichert ist. Für die Madenschraube ergibt sich so ein Doppelnutzen. Eine andere Schraube könnte durch eine weitere Bohrung des Mittelsteges in die Sicherungslasche gedreht werden. Insbesondere das oberste und das unterste Verkleidungselement lassen sich so formschlüssig am Rahmen gegen Herausfallen sichern.

In einer besonders bevorzugten Ausführungsform ist zwischen dem Mittelsteg und den Sichtstegen an den Innenseiten beider äußerer Flansche jeweils ein Innensteg angeordnet, wobei der Abstand zwischen den Kanten der Innenstege gleich dem Abstand zwischen den einander zugewandten Kanten der Sichtstege ist. Auf diese Weise ergibt sich eine Aufnahme für ein Verbindungsprofil, beispielsweise in der Art eines Kastenprofils, mit dem beispielsweise mehrere Präsentationsanordnungen nebeneinander angeordnet werden können, ohne dass die Rahmen beispielsweise infolge unebener Wandflächen, an denen die Präsentationsanordnungen befestigt sind, gegeneinander verkippen und aufwändig justiert werden müssten. Um die Verwendbarkeit eines Standardkastenprofils mit 35 mm x 20 mm zu ermöglichen beträgt der Abstand zwischen den Kanten der Innenstege vorzugsweise 20 mm bis 21 mm und der Abstand von der Außenseite des Mittelsteges zur Außenseite des Sichtsteges 17.5 mm bis 20 mm. Alternativ kann der Abstand der äußeren Flansche auch so gewählt werden, dass ein Verbindungsprofil dazwischen einführbar ist. In diesem Fall entfallen die Innenstege und die Teile der Sichtstege, die zum jeweils anderen äußeren Flansch weisen.

Vorzugsweise ist an einem unteren waagerechten Profil mindestens ein Verstellelement zur Höhenverstellung angeordnet. Insbesondere sind jedoch zwei Verstellelemente an jeweils einem Ende des unteren Profils vorgesehen, um die lotrechte Justage der Präsentationsanordnung zu erleichtern.

Hierzu ist bevorzugt ein Kastenprofil, insbesondere ein Standardkastenprofil mit 35mm x 20 mm, zwischen den äußeren Flanschen des unteren Profils angeordnet. Das Verstellelement umfasst eine Verstellschraube, eine Verstellmutter, eine dritte Bohrung in einer dem Profil zugewandten Seite des Kastenprofils und eine vierte Bohrung im Mittelsteg des unteren Profils. Die dritte Bohrung ist ausreichend groß zum Hindurchstecken eines nach unten weisenden ersten Verstellschraubenendes gestaltet. Ein nach oben weisendes zweites Verstellschraubenende ist mit einem Schlitz versehen, so dass die Verstellschraube mittels eines Schraubendrehers drehbar ist. Die vierte Bohrung ist ausreichend groß zum Hindurchstecken des zweiten Verstellschraubenendes. Die Verstellmutter ist zwischen den inneren Flanschen angeordnet und von diesen gegen Verdrehen gesichert und die Verstellschraube ist in die Verstellmutter drehbar. Zum Einstellen der Höhe und Ausrichten des Rahmens wird die Verstellschraube zunächst von der Außenseite des Profils mit ihrem zweiten Verstellschraubenende durch die vierte Bohrung gesteckt und in die zwischen die inneren Flansche seitwärts eingeführte Mutter gedreht. Anschließend wird das erste Verstellschraubenende durch die dritte Bohrung in das Kastenprofil gesteckt und dieses zwischen die äußeren Flansche geführt, bis es entweder am Mittelsteg oder am ersten Verstellschraubenende anschlägt. Wird der Rahmen mit dem Kastenprofil jetzt auf dem Boden in der Montageposition aufgesetzt, kann die Einstellung der Höhe und/oder die Ausrichtung der Präsentationsanordnung durch Drehen des zweiten Verstellschraubenendes mittels eines Schraubendrehers erfolgen.

Um standardisierte Schrauben als Verstellschrauben verwenden zu können oder die Last der Präsentationsanordnung besser und weniger punktförmig auf dem durch das zweite Verstellschraubenende belasteten Teil des Kastenprofils zu verteilen, kann das zweite Verstellschraubenende durch einen Schraubenkopf, beispielsweise einen Sechskantschraubenkopf gebildet sein.

In einer weiteren Ausführungsform sind zwei oder drei oder vier Profile entlang ihrer äußeren Flansche mittels eines zwischen den äußeren Flanschen der Profile eingeschobenen Verbindungsprofils, das als Kastenprofil oder L-Profil oder T-Profil oder X-Profil gebildet ist, miteinander verbindbar, wobei das Verbindungsprofil so gestaltet ist, dass es ohne oder mit geringem Spiel zwischen den äußeren Flanschen oder den Innenstegen und Sichtstegen der Profile gehalten wird. Auf diese Weise lassen sich Präsentationsanordnungen aus mehreren aneinander gereihten, im rechten Winkel, T-förmig oder kreuzförmig angeordneten Rahmen erstellen. Beispielsweise ist so auch eine Präsentationsanordnung mit zwei an ihren äußeren Flanschen verbundenen Profilen, die jeweils ein Konsolenelement in gleicher Höhe aufweisen möglich, bei der ein kreisförmiges Regalelement von den Konsolenelementen gehalten wird. Mit einem hinreichend großen, röhrenförmigen Verkleidungselement ist dabei die Halterung des Regalelementes auf einfache und dekorative Weise verdeckbar.

Vorzugsweise ist beim Einsatz eines Verbindungsprofils der Mittelsteg mindestens eines der Profile und/oder das Verbindungsprofil auf seiner dem Mittelsteg mindestens eines der Profile zugewandten Seite mit mindestens einem in Längsrichtung verlaufenden Langloch versehen ist, das sich an einem seiner Enden zu einer fünften Bohrung erweitert. Zu einem der Langlöcher korrespondierend ist am Mittelsteg mindestens eines der Profile und/oder am Verbindungsprofil auf seiner dem Mittelsteg mindestens eines der Profile zugewandten Seite ein Zapfen vorgesehen, der so bemessen ist, dass er durch die fünfte Bohrung passt und anschließend im Langloch verschiebbar ist, so dass sich eine lösbare Verbindung ergibt. Auf diese Weise können Profile und Verbindungsprofile schnell und ohne Werkzeug ineinander eingehängt werden

Besonders bevorzugt ist auf jeder einem der Mittelstege zugewandten Seite des Verbindungsprofils mindestens ein Langloch mit einer fünften Bohrung vorgesehen. Alle Langlöcher einer der einem der Mittelstege zugewandten Seiten weisen die jeweilige fünfte Bohrung zu einem ersten Ende des Verbindungsprofils hin und alle Langlöcher der anderen einem der Mittelstege zugewandten Seiten weisen die jeweilige fünfte Bohrung zu einem zweiten Ende des Verbindungsprofils hin auf. Alle Mittelstege sind dazu korrespondierend mit Zapfen versehen. Auf diese Weise kann beispielsweise zunächst eine erste Präsentationsanordnung fertig gestellt werden. Anschließend wird ein Verbindungsprofil in eines der Profile eingehängt. In das Verbindungsprofil werden wiederum Profile weiterer Präsentationsanordnungen eingehängt. Vorteilhaft ist hier eine Angabe der Montagereihenfolge, beispielsweise aufgedruckt oder mittels Aufklebern auf dem Verbindungsprofil.

In einer weiteren Ausführungsform umfasst das Befestigungselement eine an der Rückseite des Verkleidungselements angeordnete Aufnahme mit einem von der Vorderseite des Verkleidungselements aus magnetisch betätigbaren, schwenkbaren Riegel. In einer Verriegelungsposition greift der Riegel so hinter einen der inneren Flansche oder hinter einen der Hilfsflansche, dass das Verkleidungselement gegen Herausfallen in Richtung seiner Vorderseite gesichert ist. Der Riegel ist dazu aus einem ferromagnetischen Material gebildet. Die Aufnahme kann in der Form eines Blechs gebildet sein, das auf die Rückseite des Verkleidungselements geschraubt oder geklebt ist.

Ausführungsbeispiele der Erfindung werden im Folgenden anhand einer Zeichnung näher erläutert.

Darin zeigen:
- Figur 1: eine perspektivische Explosionsdarstellung eines Ausschnitts einer Präsentationsanordnung mit einem Profil und einem Konsolenele- ment sowie einem Regalelement,
- Figur 2: eine perspektivische Darstellung eines Ausschnitts einer Präsenta- tionsanordnung mit einem Profil und einem Konsolenelement so- wie einem Regalelement,
- Figur 3: eine perspektivische Darstellung einer Präsentationsanordnung aus zwei miteinander durch ein Verbindungsprofil verbundenen Rah- men mit Verkleidungselementen,
- Figur 4: eine perspektivische Darstellung eines Ausschnitts einer Präsenta- tionsanordnung mit einem Profil und einem Eckverbinder,
- Figur 5: eine perspektivische Darstellung eines Ausschnitts einer Präsenta- tionsanordnung mit einem Profil, einem Verkleidungselement und einem Befestigungselement,
- Figur 6: verschiedene Ansichten zweier mittels eines Verbindungsprofils verbundener Profile,
- Figur 7: eine perspektivische Darstellung eines Ausschnitts einer weiteren Ausführungsform einer Präsentationsanordnung mit einem Profil, einem Verkleidungselement und einem Befestigungselement in ei- ner entriegelten Position, und
- Figur 8: eine perspektivische Darstellung eines Ausschnitts der Präsentati- onsanordnung aus Figur 7 mit dem Befestigungselement in einer Verriegelungsposition.

Einander entsprechende Teile sind in allen Figuren mit den gleichen Bezugszeichen versehen.

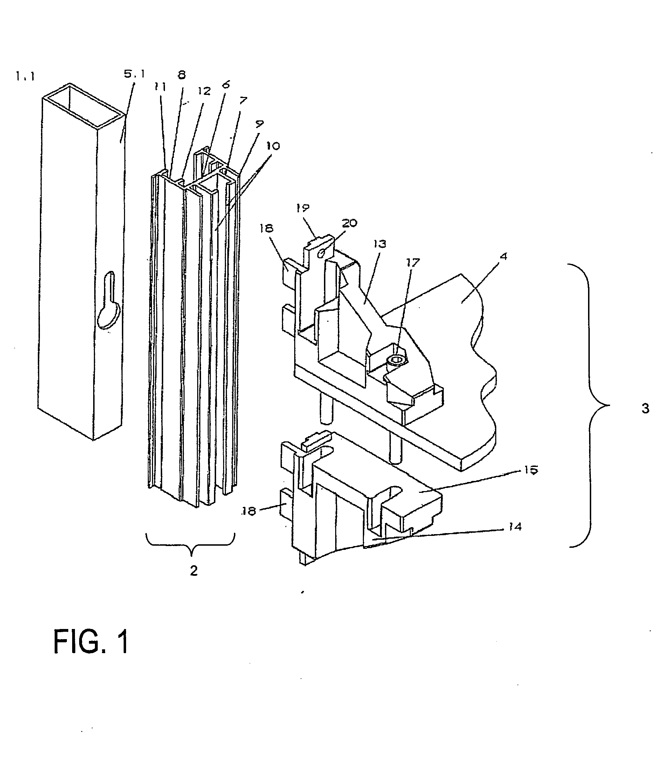

**Figur 1** zeigt eine perspektivische Explosionsdarstellung einer Präsentationsanordnung 1.1 mit einem Profil 2 und einem Konsolenelement 3 sowie einem Regalelement 4 und einem Verbindungsprofil 5.1. Das aus Aluminium gebildete Profil weist einen Mittelsteg 6, und daran angeordnet zwei innere Flansche 7, zwei äußere Flansche 8 und zwei Hilfsflansche 9 auf. An den inneren Flanschen 7 ist jeweils ein Befestigungssteg 10 angeordnet. Die äußeren Flansche 8 sind jeweils mit einem Sichtsteg 11 und einem Innensteg 12 versehen. Das Konsolenelement 3 ist zweiteilig aus einem Oberteil 13 und einem Unterteil 14 gebildet, die im vorliegenden Fall gleich ausgebildet sind. Das Oberteil 13 und das Unterteil 14 weisen jeweils eine Spannfläche 15 auf. Zwischen den Spannflächen 15 kann das Regalelement 4 gespannt werden. Zur Druckverteilung sind zwischen jeweils einer Fläche des Regalelements 4 und einer Spannfläche 15 elastische Lagen 16, beispielsweise aus Silikonkautschuk vorgesehen. Das Regalelement 4 ist aus einem Sicherheitsglas gefertigt. Zum Einspannen des Regalelements 4 werden das Oberteil 13 und das Unterteil 14 mittels zweier Spannschrauben 17 gegeneinander gezogen. Das Oberteil 13 und das Unterteil 14 sind jeweils mit Klemmschienen 18 versehen, die kraftschlüssig und lösbar durch Aufstecken auf die inneren Flansche 7 mit diesen verbindbar sind. Die Klemmschienen 18 sind paarweise mit einem Abstand zueinander angeordnet, der in etwa dem Abstand der Außenflächen der inneren Flansche 7 entspricht oder geringfügig kleiner ist, damit sich ein Kraftschluss infolge elastischer Verformung der Klemmschienen 18 und/oder der inneren Flansche 7 ergibt. Für einen zusätzlichen Formschluss sorgen am Oberteil 13 und am Unterteil 14 angebrachte Nasen 19 (hier nur am Oberteil 13 sichtbar). Eine hier im Bereich der Nase 19 angebrachte Sicherungsbohrung 20 dient der Aufnahme einer Sicherungsschraube (nicht gezeigt), mit der das Oberteil 13 und (nicht gezeigt) dass Unterteil 14 zusätzlich am Profil 2 fixiert werden können. Diese kann beispielsweise in einer Sicherungsmutter verschraubt sein, die hinter den Befestigungsstegen 10 gehalten wird. Die Klemmschienen 18 sind hier als Klemmschienensegmente ausgeführt, da dies die Fertigung der Konsolenelemente erleichtert. Sie können jedoch auch durchgehend ausgeführt sein. Das Verbindungsprofil 5.1 weist eine Breite auf, die ungefähr dem Abstand der Sichtstege 11 und der Innenstege 12 voneinander entspricht, so dass es zwischen diese geschoben werden kann. Auf den dann noch aus dem Profil 2 herausragenden Teil des Verbindungsprofils 5.1 kann ein weiteres Profil 2 aufgeschoben werden (nicht gezeigt), so dass ein Ausrichten der Profile 2 zueinander entfallen kann.

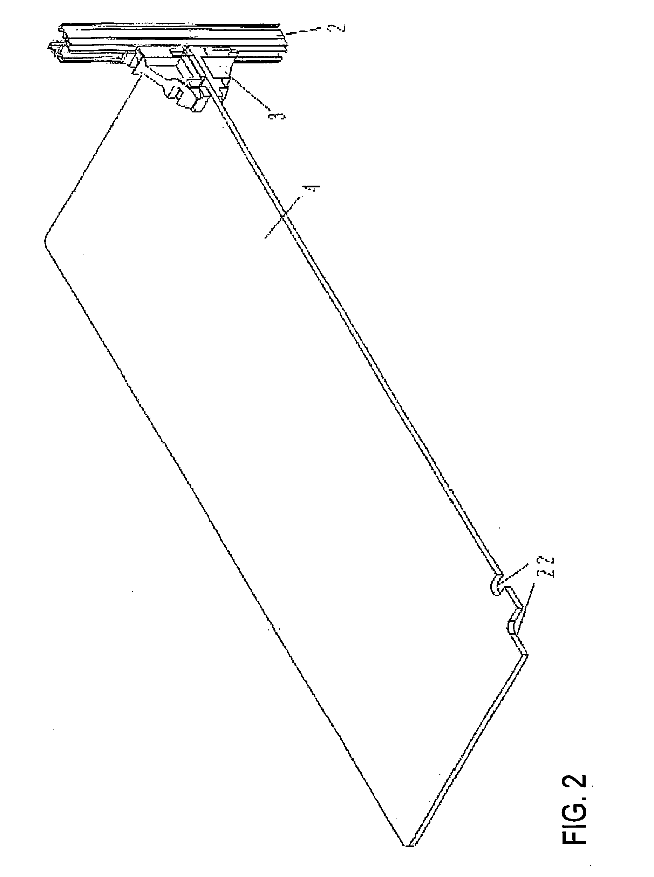

Figur 2 zeigt das Profil 2, das Konsolenelement 3 und das Regalelement 4 gegenüber Figur 1 verkleinert. In dieser Ansicht wird anhand von Aussparungen 22 deutlich, wie das Regalelement 4 vom Konsolenelement 3 gehalten wird. Die Aussparungen 22 sind an den Stellen vorgesehen, durch die Spannschrauben geführt werden oder an denen das Profil 2 verläuft.

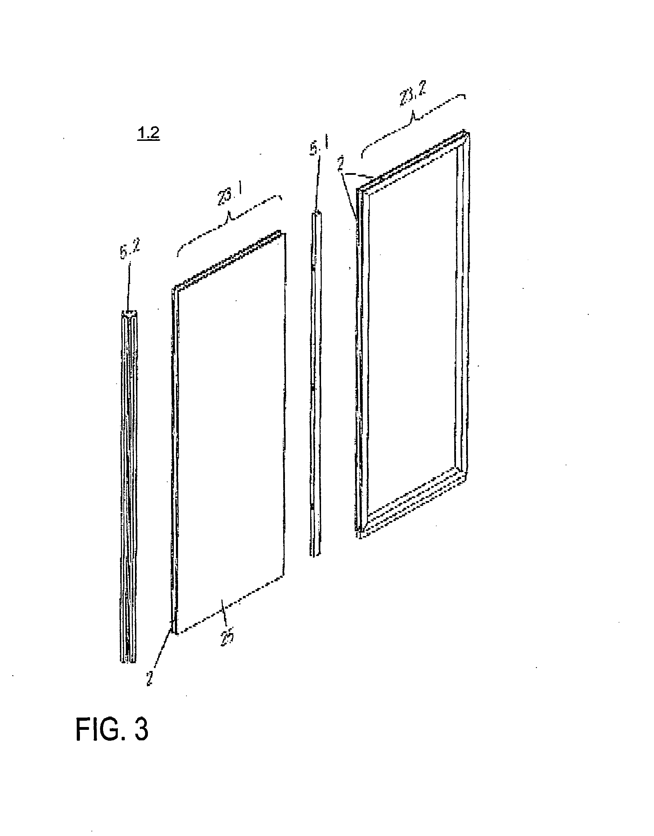

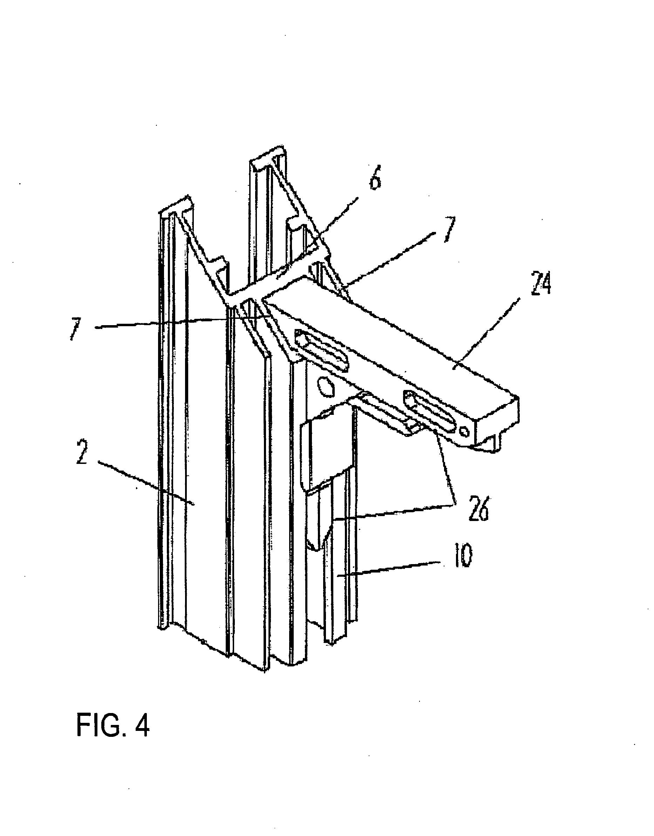

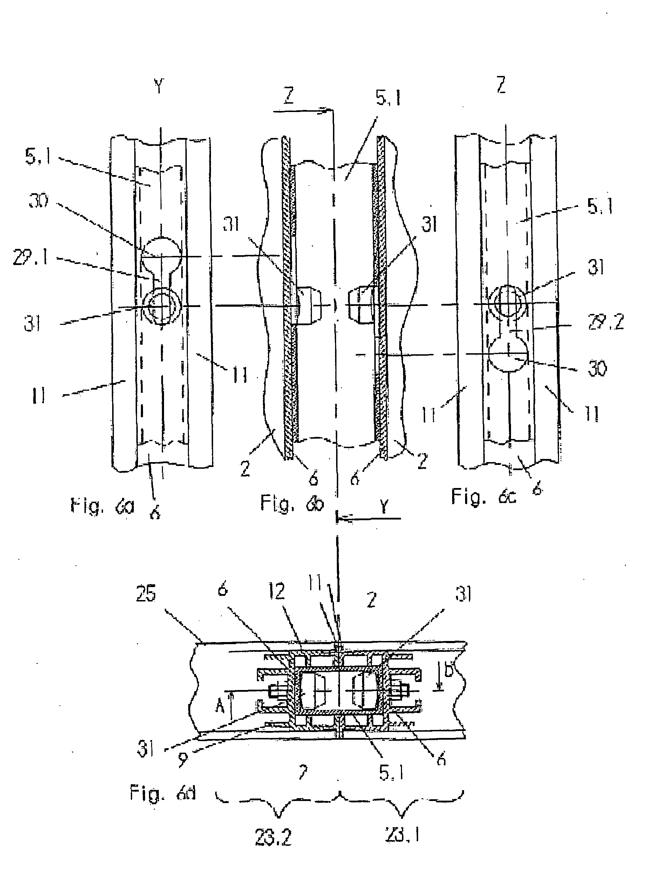

Figur 3 zeigt eine weitere Ausführungsform einer Präsentationsanordnung 1.2 aus zwei miteinander durch ein Verbindungsprofil verbundenen Rahmen 23.1, 23.2, die jeweils aus vier umlaufenden Profilen 2 gebildet sind. Die Profile 2 sind an ihren Enden jeweils mit einem 45° Gehrungsschnitt versehen und mit hier nicht gezeigten Eckverbindern 24 miteinander verbunden, wie in Figur 4 gezeigt wird. Der linke der beiden Rahmen 23.1 ist mit einem Verkleidungselement 25 versehen. Das Verkleidungselement 25 liegt auf einer der Außenseiten jedes der äußeren Flansche 8 der Profile 2 des Rahmens 23.1 auf und wird von deren Sichtstegen 11 (hier nicht sichtbar) seitlich umgrenzt. Das Verkleidungselement 25 hat die Form einer opaken, mit Dekors oder Texturen versehener Glasscheibe. Die beiden Rahmen 23.1, 23.2 sind mit dem Verbindungsprofil 5.1 miteinander verbindbar, indem dieses zwischen die äußeren Flansche 8 der einander zugewandten Profile 2 der Rahmen 23.1, 23.2 geschoben und dort eingehängt wird, wie im Detail in den Figuren 6a bis 6d gezeigt wird. Das gezeigte Verbindungsprofil 5.1 ist kastenförmig gebildet. Eine weitere Variante eines Verbindungsprofils 5.2 wird an der Seite des Rahmens 23.1 gezeigt. Dieses Verbindungsprofil 5.2 ist kreuzförmig gebildet, so dass vier Profile zueinander rechtwinklig miteinander verbindbar sind. Weitere Varianten für Verbindungsprofile 5 sind beispielsweise L-förmig zur 90° -Verbindung zweier Profile 2 oder T-förmig zur Verbindung dreier Profile 2. Auch die hier gezeigte Präsentationsanordnung 1.2 kann selbstverständlich mit Regalelementen 4 und Konsolenelementen 3 versehen werden, wie in den Figuren 1 und 2 gezeigt ist. In diesem Fall kämen oberhalb, unterhalb und zwischen mehreren Regalelementen 4 jeweils eigene Verkleidungselemente 25 zum Einsatz, die direkt an die Regalelemente 4 angrenzen, so dass die Konsolenelemente 3 verdeckt sind und der ästhetische Gesamteindruck nur von der Gestaltung der Verkleidungselemente 25 und der Regalelemente 4 bestimmt wird.

**Figur 4** zeigt eine perspektivische Darstellung eines Ausschnitts einer Präsentationsanordnung 1.1, 1.2 mit einem Profil 2 und einem Eckverbinder 24. Er weist zwei Schenkel 26 auf, die rechtwinklig aufeinander stehen und jeweils so bemessen sind, dass sie ohne oder mit geringem Spiel in einen Abschnitt eines vom Mittelsteg 6, den beiden inneren Flanschen 7 und den beiden Befestigungsstegen 10 umgrenzten Raumes vom Ende des Profils 2 her einführbar sind. Die Profile 2, von denen der besseren Anschaulichkeit halber nur eines gezeigt ist, sind an ihren Enden jeweils mit einem 45° Gehrungsschnitt versehen. Im Interesse eines guten Zusammenhalts der Eckverbinder 24 mit den Profilen 2 ist eine leichte Presspassung vorteilhaft. Der Zusammenhalt kann zusätzlich mittels in den Eckverbinder 24 geschnittenen Gewinden und durch eine erste Bohrung im Mittelsteg 6 des Profils 2 in das Gewinde gedrehten Madenschraube gegen Verrutschen gesichert werden (nicht gezeigt).

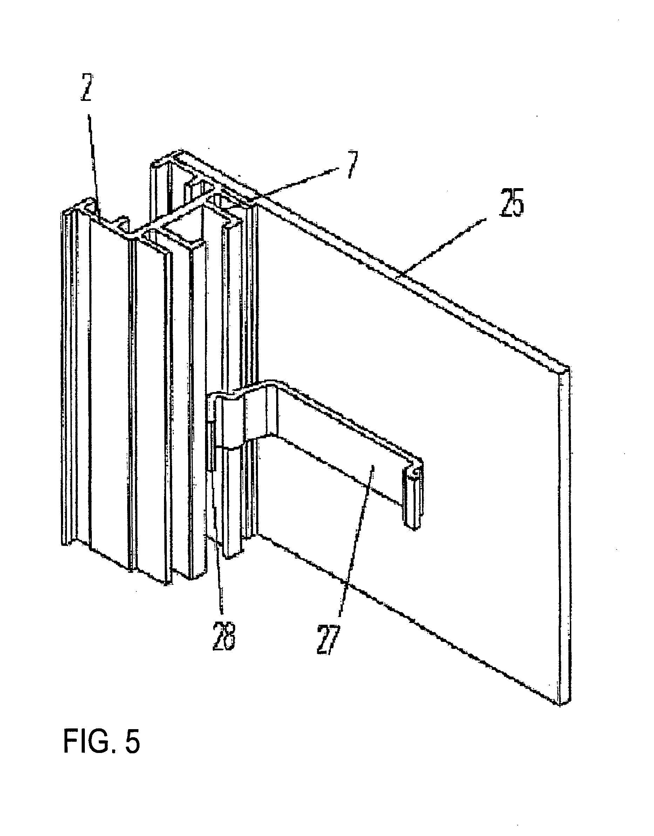

**Figur 5** zeigt eine perspektivische Darstellung eines Ausschnitts einer Präsentationsanordnung 1.1, 1.2 mit einem Profil 2, einem Verkleidungselement 25 und einem Befestigungselement 27. Im gezeigten Beispiel ist das Befestigungselement 27 als Halteklammer ausgebildet, die auf der Rückseite des Verkleidungselements 25 aufgeklebt ist. Sie weist ein elastisches Rastelement 28 auf, das zwischen den beiden inneren Flanschen 7 so einrastet, dass das Verkleidungselement 25 gegen Herausfallen in Richtung seiner Vorderseite gesichert ist. Typischerweise wird eine größere Anzahl solcher oder anderer Befestigungselemente 27 an jedem Verkleidungselement 25 angeordnet.

Die **Figuren 6a bis 6d** zeigen verschiedene Ansichten zweier mittels eines Verbindungsprofils 5.1 verbundener Profile 2. Figur 6d zeigt einen Querschnitt, die Figuren 6 a und 6 c einen Längsschnitt entlang der durch Y und Z bezeichneten Ebene und Figur 6b einen Längsschnitt entlang der durch A und B bezeichneten Ebene. Das Verbindungsprofil 5.1 ist als Kastenprofil ausgebildet, dessen Außenabmessungen so gewählt sind, dass es ohne oder mit geringem Spiel einerseits zwischen den Sichtstegen 11 und den Innenstegen 12 und andererseits zwischen den Mittelstegen 6 der Profile 2 Platz findet. An den jeweils einem Mittelsteg 6 zugewandten Seiten des Verbindungsprofils 5.1 sind Langlöcher 29.1, 29.2 vorgesehen, die sich an jeweils einem Ende zu einer fünften Bohrung 30 erweitern. Zu jedem der Langlöcher 29.1, 29.2 ist korrespondierend am Mittelsteg 6 ein Zapfen 31 vorgesehen, der so bemessen ist, dass er durch die fünfte Bohrung 30 passt und anschließend im Langloch 29.1, 29.2 verschiebbar ist, so dass sich eine lösbare Verbindung ergibt. Beim Langloch 29.1 zeigt die fünfte Bohrung nach oben, beim Langloch 29.2 nach unten. Ist beispielsweise zuerst der Rahmen 23.1 aufgebaut, kann das Verbindungsprofil 5.1 mit dem Langloch 29.2 in das zum Rahmen 23.1 gehörige Profil 2 eingehängt werden. Anschließend wird von der anderen Seite des Verbindungsprofils 5.1 her das zum Rahmen 23.2 gehörige Profil 2 in das Langloch 29.1 eingehängt und der Rahmen 23.2 aufgebaut. Die Montagereihenfolge kann auf den Profilen 2 und/oder dem Verbindungsprofil 5.1, 5.2 gekennzeichnet sein. Wie aus Figur 6d deutlich wird, sind beide Rahmen 23.1, 23.2 mit Verkleidungselementen 25 versehen. Der gezeigte Rahmen 2 des Rahmens 23.2 ist mit Hilfsflanschen 9 versehen. Zur Erleichterung der Montage der Verkleidungselemente 25 auf dem Rahmen 2 kann zwischen dem Hilfsflansch 9 und dem Verkleidungselement 25 eine Montagehilfsbefestigung vorgesehen sein, beispielsweise als Klettverschluss aus zwei aneinander haftenden Streifen, wobei der erste Streifen auf dem Hilfsflansch 9 und der zweite Streifen auf der Rückseite des Verkleidungselements 25 angeordnet ist.

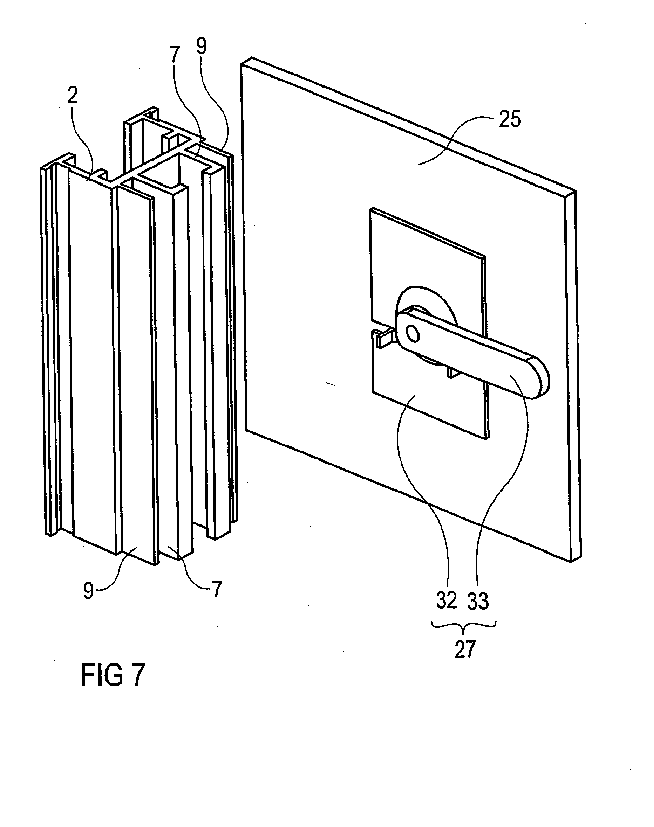

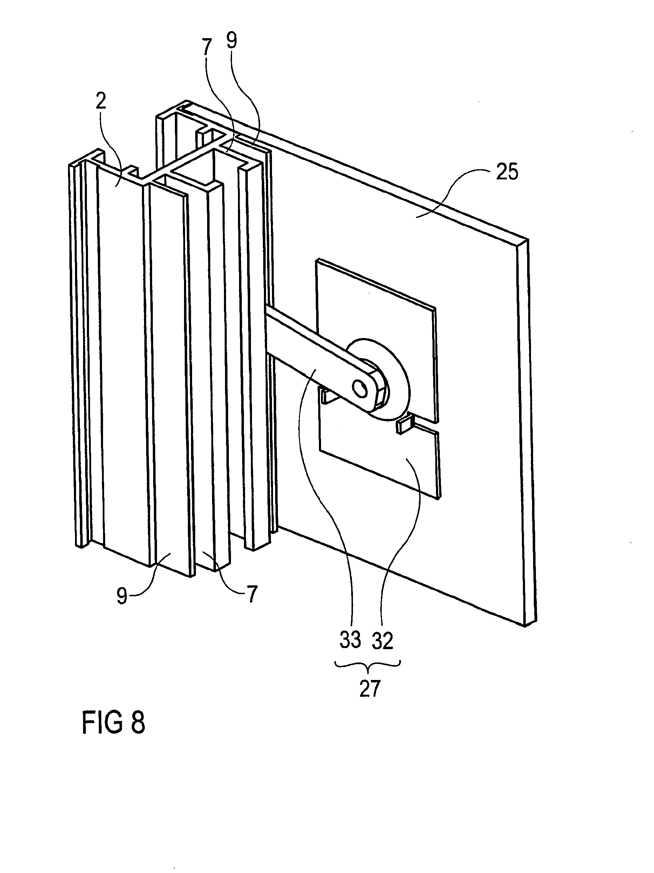

In **Figur 7** ist eine perspektivische Darstellung eines Ausschnitts einer weiteren Ausführungsform einer Präsentationsanordnung 1.1,1.2 mit einem Profil 2, einem Verkleidungselement 25 und einem Befestigungselement 27. Das Befestigungselement 27 umfasst eine an der Rückseite des Verkleidungselements 25 angeordnete Aufnahme 32 mit einem von der Vorderseite des Verkleidungselements 25 aus magnetisch betätigbaren Riegel 33, der an der Aufnahme 32 schwenkbar angeordnet ist. Der Riegel 33 befindet sich in einer entriegelten Position. Mittels eines Magneten kann der Riegel 33 von der Vorderseite des Verkleidungselements 25 aus in eine Verriegelungsposition geschwenkt werden, die in Figur 8 gezeigt ist.

In **Figur 8** befindet sich der Riegel 33 in der Verriegelungsposition, in der er hinter den Hilfsflansch 9 greift, so dass das Verkleidungselement 25 gegen Herausfallen in Richtung seiner Vorderseite gesichert ist.

Der Riegel 33 ist insbesondere aus einem ferromagnetischen Material gebildet. Die Aufnahme 32 kann die Form eines Blechs aufweisen, das auf die Rückseite des Verkleidungselements 25 geschraubt oder geklebt ist.

Der Riegel 33 kann alternativ so gebildet sein, dass er in der Verriegelungsposition hinter einen der inneren Flansche 7 greift.

Die gezeigten Klemmschienen 18 können als Klemmschienensegmente in Form unterbrochener Klemmschienen ausgeführt sein. Insbesondere sind die Klemmschienensegmente an einem der inneren Flansche 7 zu den Klemmschienensegmenten an dem anderen der inneren Flansche 7 in Längsrichtung des Profils 2 versetzt.

Die Profile 2 sind vorzugsweise als Strangpressprofile aus Aluminium gefertigt.

Die Präsentationsanordnung 1.1 kann mit anderen Profilen 2 als den gezeigten kombiniert werden, die jedoch mindestens innere Flansche 7 aufweisen.

Die Anzahl der Spannschrauben 17 an jedem Konsolenelement 3 und dementsprechend die Anzahl und Gestalt der Aussparungen 22 im Regalelement 4 kann anders als in den Ausführungsbeispielen gewählt werden.

Das Oberteil 13 und/oder das Unterteil 14 können zueinander einen Anschlag aufweisen, der einen Mindestabstand zur Begrenzung der auf das Regalelement 4 wirkenden Presskraft aufweisen.

Zumindest eines der Profile 2 kann mittels eines Wandmontageelementes an einer Wand fixierbar sein, wobei das Wandmontageelement beispielsweise eine Platte mit mindestens einer zweiten Bohrung oder mindestens einem Langloch zur Befestigung an der Wand und eine Klammer aufweist und die Platte an einer Außenseite eines der äußeren Flansche 8 anliegt und wobei die mit der Platte fest oder insbesondere verstellbar verbundene Klammer zwischen einen der inneren Flansche 7 und einen der Hilfsflansche 9 oder zwischen die Hilfsflansche 9 so greift, dass das Profil 2 gegen Verrutschen in Richtung seiner Innenseite und in Normalrichtung der vom Rahmen 23.1, 23.2 eingeschlossenen Ebene gesichert ist.

Als Befestigungselement 27 kann alternativ oder zusätzlich mindestens eine Sicherungsplatte vorgesehen sein, die auf der Rückseite des Verkleidungselements 25 angeordnet, insbesondere angeklebt ist. Sie weist eine Sicherungslasche auf, in die die Madenschraube eines der Eckverbinder 24 oder eine andere Schraube so drehbar ist, dass das Verkleidungselement 25 gegen Herausfallen in Richtung seiner Vorderseite gesichert ist.

Um die Verwendbarkeit eines Standardkastenprofils mit 35 mm x 20 mm als Verbindungsprofil 5.1 zu ermöglichen beträgt der Abstand zwischen den Kanten der Innenstege 12 und der Sichtstege 11 vorzugsweise 20 mm bis 21 mm und der Abstand von der Außenseite des Mittelsteges 6 zur Außenseite des Sichtsteges 11 vorzugsweise 17.5 mm bis 20 mm. Alternativ kann der Abstand der äußeren Flansche 8 auch so gewählt werden, dass ein Verbindungsprofil 5.1 bis 5.n dazwischen einführbar ist. In diesem Fall entfallen die Innenstege 12 und die Teile der Sichtstege 11, die zum jeweils anderen äußeren Flansch 8 weisen.

Vorzugsweise ist an einem unteren waagerechten Profile 2 mindestens ein Verstellelement zur Höhenverstellung angeordnet. Insbesondere sind jedoch zwei Verstellelemente an jeweils einem Ende des unteren Profils 2 vorgesehen, um die lotrechte Justage der Präsentationsanordnung 1.1, 1.2 zu erleichtern. Hierzu ist bevorzugt ein Kastenprofil, insbesondere ein Standardkastenprofil mit 35mm x 20 mm, zwischen den äußeren Flanschen des unteren Profils angeordnet, in das verschiedene marktübliche Verstellelemente eingebaut werden können.

Eine weitere mögliche Präsentationsanordnung 1 umfasst zwei an ihren äußeren Flanschen 8 mittels eines Verbindungsprofils 5.1 verbundene Profile 2, die jeweils ein Konsolenelement 3 in gleicher Höhe aufweisen, auf denen ein kreisförmiges Regalelement 4 gehalten wird. Mit einem hinreichend großen, röhrenförmigen Verkleidungselement ist dabei die Halterung des Regalelementes 4 auf einfache und dekorative Weise verdeckbar.

Das Konsolenelement 2 kann auch so ausgeführt sein, dass die Klemmschienen 18 durch Einstecken zwischen die inneren Flansche 7 oder die Befestigungsstege 10 mit diesen verbindbar sind.

### BEZUGSZEICHENLISTE

- 1: Präsentationsanordnung
- 2: Profil
- 3: Konsolenelement
- 4: Regalelement
- 5: Verbindungsprofil
- 6: Mittelsteg
- 7: Innerer Flansch
- 8: Äußerer Flansch
- 9: Hilfsflansch
- 10: Befestigungssteg
- 11: Sichtsteg
- 12: Innensteg
- 13: Oberteil
- 14: Unterteil
- 15: Spannfläche
- 16: Elastische Lage
- 17: Spannschraube
- 18: Klemmschiene
- 19: Nase
- 20: Sicherungsbohrung
- 21: Sicherungsmutter
- 22: Aussparung
- 23: Rahmen
- 24: Eckverbinder
- 25: Verkleidungselement
- 26: Schenkel
- 27: Befestigungselement
- 28: Rastelement
- 29: Langloch
- 30: Fünfte Bohrung
- 31: Zapfen
- 32: Aufnahme
- 33: Riegel

## Patentansprüche

1. Präsentationsanordnung (1.1), umfassend mindestens ein ein- oder mehrteiliges Profil (2), mindestens ein im Wesentlichen horizontal ausgerichtetes flächiges Regalelement (4) und mindestens ein Konsolenelement (3), wobei jedes der Profile (2) zumindest einen Mittelsteg (6) und daran angeordnet zwei einander parallele innere Flansche (7) aufweist, wobei mindestens eines der Profile (2) vertikal ausgerichtet ist, wobei das Konsolenelement (3) aus einem Oberteil (13) und einem Unterteil (14) gebildet ist, die mittels mindestens einer Spannschraube (17) gegeneinander ziehbar sind und jeweils eine Spannfläche (15) aufweisen, wobei die Spannflächen (15) einander im wesentlichen parallel liegen, und wobei das Oberteil (13) und/oder das Unterteil (14) mit Klemmschienen (18) und/oder Klemmschienensegmenten versehen sind, die kraftschlüssig und lösbar durch Aufstecken auf die inneren Flansche (7) oder Einstecken zwischen die inneren Flansche (7) mit diesen verbindbar sind, wobei jedes Regalelement (4) zwischen den Spannflächen (15) mindestens eines Konsolenelementes (3) kraftschlüssig durch Anziehen der Spannschraube (17) oder der Spannschrauben (17) fixierbar ist.

2. Präsentationsanordnung (1.1) nach Anspruch 1, **dadurch gekennzeichnet, dass** das Profil (2) zwei zu einer Außenseite eines aus vier umlaufenden Profilen (2) gebildeten Rahmens (23.1 bis 23.n) gerichtete, einander parallele äußere Flansche (8) aufweist.

3. Präsentationsanordnung (1.1) nach Anspruch 2, **dadurch gekennzeichnet, dass** mindestens ein senkrechtes flächenhaftes Verkleidungselement (25) angeordnet ist, wobei jedes Verkleidungselement (25) auf einer Außenseite eines der äußeren Flansche (8) mindestens zweier Profile (2) aufliegt.

4. Präsentationsanordnung (1.1) nach einem der Ansprüche 1 bis 3, **dadurch gekennzeichnet, dass** jeder der inneren Flansche (7) an seiner Kante parallel zum Mittelsteg (6) jeweils einen Befestigungssteg (10) aufweist, der zum jeweils anderen der inneren Flansche (7) weist.

5. Präsentationsanordnung (1.1) nach Anspruch 4, **dadurch gekennzeichnet, dass** zwischen benachbarten Enden jeweils zweier Profile (2) eines Rahmens ein Eckverbinder (24) vorgesehen ist, der ohne oder mit geringem Spiel in je einen Abschnitt eines vom Mittelsteg (6), den beiden inneren Flanschen (7) und den beiden Befestigungsstegen (10) umgrenzten Raumes beider Profile (2) vom Ende her so einführbar ist, dass die Profile (2) rechtwinklig zueinander stehen.

6. Präsentationsanordnung (1.1) nach einem der Ansprüche 3 bis 5, **dadurch gekennzeichnet, dass** parallel zu den inneren Flanschen (7) zwei Hilfsflansche (9) an der Innenseite des Profils (2) so angeordnet sind, dass die inneren Flansche (7) zwischen den Hilfsflanschen (9) liegen, wobei deren Abstand voneinander größer ist als der Abstand zwischen den inneren Flanschen (7) und kleiner ist als der Abstand zwischen den äußeren Flanschen (8) und dass das Verkleidungselement (25) mittels zumindest einer Montagehilfsbefestigung an einem der Hilfsflansche (9) zumindest eines Profils (2) lösbar fixierbar ist.

7. Präsentationsanordnung (1.1) nach einem der Ansprüche 2 bis 6, **dadurch gekennzeichnet, dass** an dem den Rahmen (23.1 bis 23.n) nach unten begrenzenden Profil (2) mindestens ein Verstellelement zur Höhenverstellung angeordnet ist.

8. Präsentationsanordnung (1.1) nach Anspruch 7, **dadurch gekennzeichnet, dass** ein Kastenprofil zwischen den äußeren Flanschen (8) des den Rahmen (23.1 bis 23.n) nach unten begrenzenden Profils (2) angeordnet ist und dass das Verstellelement eine Verstellschraube, eine Verstellmutter, eine dritte Bohrung in einer dem Profil (2) zugewandten Seite des Kastenprofils und eine vierte Bohrung im Mittelsteg (6) des unteren Profils (2) umfasst, wobei die dritte Bohrung ausreichend groß zum Hindurchstecken eines nach unten weisenden ersten Verstellschraubenendes ist, wobei ein zweites Verstellschraubenende mit einem Schlitz versehen ist, wobei die vierte Bohrung ausreichend groß zum Hindurchstecken des zweiten Verstellschraubenendes ist, wobei die Verstellmutter zwischen den inneren Flanschen (7) angeordnet und von diesen gegen Verdrehen gesichert und die Verstellschraube in die Verstellmutter drehbar ist.

9. Präsentationsanordnung (1.1) nach einem der Ansprüche 2 bis 8, **dadurch gekennzeichnet, dass** zwei oder drei oder vier Profile (2) entlang ihrer äußeren Flansche (8) mittels eines zwischen den äußeren Flanschen (8) der Profile (2) eingeschobenen Verbindungsprofils (5.1 bis 5.n), das als Kastenprofil oder L-Profil oder T-Profil oder X-Profil gebildet ist, miteinander verbindbar sind, wobei das Verbindungsprofil (5.1bis 5.n) so gestaltet ist, dass es ohne oder mit geringem Spiel zwischen den äußeren Flanschen (8) oder den Innenstegen (12) und Sichtstegen (11) der Profile (2) gehalten wird.

10. Präsentationsanordnuna (1.1) nach Anspruch 9, **dadurch gekennzeichnet, dass** der Mittelsteg (6) mindestens eines der Profile (2) und/oder das Verbindungsprofil (5.1 bis 5.n) auf seiner dem Mittelsteg (6) mindestens eines der Profile (2) zugewandten Seite mit mindestens einem in Längsrichtung verlaufenden Langloch (29.1, 29.2) versehen ist, das sich an einem seiner Enden zu einer fünften Bohrung (30) erweitert und dass zu einem der Langlöcher (29.1, 29.2) korrespondierend am Mittelsteg (6) mindestens eines der Profile (2) und/oder am Verbindungsprofil (5.1 bis 5.n) auf seiner dem Mittelsteg (6) eines der Profile (2) zugewandten Seite ein Zapfen (31) vorgesehen ist, der so bemessen ist, dass er durch die fünfte Bohrung (30) passt und anschließend im Langloch (29.1,29.2) verschiebbar ist, so dass sich eine lösbare Verbindung ergibt.

## Claims

1. A display arrangement (1.1) comprising at least one profile (2) made of one or more parts, at least one substantially horizontally oriented planar rack element (4) and at least one bracket element (3), whereby each of the profiles (2) comprises at least one central web (6) and two parallel inner flanges (7) arranged thereon, whereby at least one of the profiles (2) is vertically oriented, whereby the bracket element (3) is formed from a top part (13) and a bottom part (14), which can be drawn against one another by means of at least one tensioning screw (17), each having a tensioning surface (15), whereby the tensioning surfaces (15) are substantially parallel and whereby the top part (13) and/or bottom part (14) are provided with clamping rails (18) and/or clamping rail segments, which can be force-fittingly and detachably connected with these by plugging onto the inner flanges (7) or by insertion between the inner flanges (7), whereby each rack element (4) can be force-fittingly fixed between the tensioning surfaces (15) of at least one bracket element (3) by tightening the tensioning screw (17) or tensioning screws (17).

2. The display arrangement (1.1) according to claim 1, **characterized in that** the profile (2) comprises two parallel outer flanges (8) oriented to an exterior of a frame (23.1 to 23.n) formed by four wrap-around profiles (2).

3. The display arrangement (1.1) according to claim 2, **characterized in that** at least one vertical planar paneling element (25) is arranged, whereby each paneling element (25) rests on an exterior of one of the outer flanges (8) of at least two profiles (2).

4. The display arrangement (1.1) according to one of the claims 1 to 3, **characterized in that** each of the inner flanges (7) comprises one fastening web (10) each at its edge parallel to the central web (6) pointing at the respective other flange of the inner flanges (7).

5. The display arrangement (1.1) according to claim 4, **characterized in that** a corner joint (24) is provided between adjacent ends of respective two profiles (2) of a frame, whereas the corner joint (24) is insertable from the end without play or with little play into one section each of a space of both profiles (2) bordered by the central web (6), both inner flanges (7) and both fastening webs (10) in such a manner that the profiles (2) are right-angled to each other.

6. The display arrangement (1.1) according to one of the claims 3 to 5, **characterized in that** two auxiliary flanges (9) are arranged at the interior of the profile (2) parallel to the inner flanges (7) in such a manner that the inner flanges (7) rest between the auxiliary flanges (9), whereby their distance from one another is greater than the distance between the inner flanges (7) and smaller than the distance between the outer flanges (8) and that the paneling element (25) can be detachably fixed to one of the auxiliary flanges (9) of at least one profile (2) by means of at least one auxiliary assembly fixture.

7. The display arrangement (1.1) according to one of the claims 2 to 6, **characterized in that** at least one adjusting element for height adjustment is arranged on the profile (2) bordering the frame (23.1 to 23.n) downwards.

8. The display arrangement (1.1) according to claim 7, **characterized in that** a box section is arranged between the outer flanges (8) of the profile (2) which is bordering the frame (23.1 to 23.n) downwards and that the adjusting element comprises an adjusting screw, an adjusting nut, a third bore in a box section side facing the profile (2) and a fourth bore within the central web (6) of the lower profile (2), whereby the third bore is sufficiently large for the insertion of a downward-pointing first adjusting screw end, whereby a second adjusting screw end is provided with a slot, whereby the fourth bore is sufficiently large for the insertion of the second adjusting screw end, whereby the adjusting nut is arranged between the inner flanges (7) and secured by these against rotating and the adjusting screw is rotatable into the adjusting nut.

9. The display arrangement (1.1) according to one of the claims 2 to 8, **characterized in that** two or three or four profiles (2) are connectable to one another along their outer flanges (8) by means of a connecting profile (5.1 to 5.n) inserted between the outer flanges (8) of the profiles (2) and formed as a box section or L profile or T profile or X profile, whereby the connecting profile (5.1 to 5.n) is designed in such a manner that it is held without play or with little play between the outer flanges (8) or the inner webs (12) and visible webs (1.1) of the profiles (2).

10. The display arrangement (1.1) according to claim 9, **characterized in that** the central web (6) of at least one of the profiles (2) and/or the connecting profile (5.1 to 5.n) is provided on its side facing the central web (6) of at least one of the profiles (2) with at least one long hole (29.1, 29.2) running in the longitudinal direction, which expands at one of its ends to a fifth bore (30) and **characterized in that** a dog point (31) is provided on the central web (6) of at least one of the profiles (2) and/or on the connecting profile (5.1 to 5.n) on its side facing the central web (6) of one of the profiles (2), the dog point (31) corresponding to one of the long holes (29.1, 29.2) and measured in such a matter that it fits through the fifth bore (30) and is subsequently slidable in the long hole (29.1, 29.2), so that a detachable connection results.

## Revendications

1. Agencement de présentation (1.1), comprenant au moins un profilé (2) en une ou plusieurs parties, au moins un élément de rayonnage plat (4) orienté sensiblement horizontalement et au moins un élément de console (3), où chacun des profilés (2) présente au moins une traverse centrale (6) et deux brides (7) intérieures disposées contre celle-ci et parallèles l'une à l'autre, où au moins un des profilés (2) est orienté verticalement, où l'élément de console (3) est formé d'une pièce supérieure (13) et d'une pièce inférieure (14), lesquelles peuvent être serrées l'une contre l'autre au moyen d'au moins une vis de serrage (17) et qui présentent chacune une surface de serrage (15), où lesdites surfaces de serrage (15) sont sensiblement parallèles l'une à l'autre, et où la pièce supérieure (13) et/ou la pièce inférieure (14) sont pourvues de rails de blocage (18) et/ou de segments de rails de blocage, lesquels peuvent être assemblés mécaniquement et de manière amovible avec les brides intérieures (7) par emboîtement sur les brides intérieures (7) ou insertion entre celles-ci, où chaque élément de rayonnage (4) est fixable mécaniquement entre les surfaces de serrage (15) d'au moins un élément de console (3) par serrage de la vis de serrage (17) ou des vis de serrage (17).

2. Agencement de présentation (1.1) selon la revendication 1, **caractérisé en ce que** le profilé (2) comporte deux brides extérieures (8) parallèles l'une à l'autre et dirigées vers une face extérieure d'un cadre (23.1 à 23.n) formé de quatre profilés (2) périphériques.

3. Agencement de présentation (1.1) selon la revendication 2, **caractérisé en ce qu'**au moins un élément vertical d'habillage de surface (25) est prévu, chaque élément vertical d'habillage (25) reposant sur une face extérieure d'une des brides extérieures (8) d'au moins deux profilés (2).

4. Agencement de présentation (1.1) selon l'une des revendications 1 à 3, **caractérisé en ce que** chacune des brides intérieures (7) présente sur son bord une traverse de fixation (10) parallèle à la traverse centrale (6), laquelle est dirigée vers l'autre bride intérieure (7).

5. Agencement de présentation (1.1) selon la revendication 4, **caractérisé en ce qu'**il est prévu une équerre de raccord d'angle entre les extrémités contiguës de chaque groupe de deux profilés (2) d'un cadre, laquelle est insérable depuis l'extrémité, sans jeu ou avec un jeu réduit, dans une partie correspondante d'un espace des deux profilés (2) délimité par la traverse centrale (6), les deux brides intérieures (7) et les deux traverses de fixation (10), de manière à rendre les profilés (2) perpendiculaires l'un à l'autre.

6. Agencement de présentation (1.1) selon l'une des revendications 3 à 5, **caractérisé en ce que** deux brides auxiliaires (9) sont disposées sur la face intérieure du profilé (2) parallèlement aux brides intérieures (7), de telle manière que les brides intérieures (7) sont comprises entre les brides auxiliaires (9), leur espacement entre elles étant supérieur à l'espacement entre les brides intérieures (7) et inférieur à l'espacement entre les brides extérieures(8), et **en ce que** l'élément d'habillage (25) est fixable de manière amovible au moyen d'au moins une fixation auxiliaire de montage contre l'une des brides auxiliaires (9) d'au moins un profilé (2).

7. Agencement de présentation (1.1) selon l'une des revendications 2 à 6, **caractérisé en ce qu'**au moins un élément de réglage destiné au réglage de hauteur est disposé contre le profilé (2) délimitant le cadre (23.1 à 23.n) vers le bas.

8. Agencement de présentation (1.1) selon la revendication 7, **caractérisé en ce qu'**un profilé en caisson est disposé entre les brides extérieures (8) du profilé (2) délimitant le cadre (23.1 à 23.n) vers le bas, et **en ce que** l'élément de réglage comprend une vis de réglage, un écrou de réglage, un troisième alésage sur une face du profilé en caisson opposée au profilé (2) et un quatrième alésage dans la traverse centrale (6) du profilé inférieur (2), le troisième alésage étant suffisamment grand pour permettre le passage d'une première extrémité de vis de réglage dirigée vers le bas, une deuxième extrémité de vis de réglage étant munie d'une fente, le quatrième alésage étant suffisamment grand pour permettre le passage de la deuxième extrémité de vis de réglage, l'écrou de réglage étant disposé entre les brides intérieures (7) et sa rotation étant empêchée par celles-ci, et la vis de réglage pouvant tourner dans l'écrou de réglage.

9. Agencement de présentation (1.1) selon l'une des revendications 2 à 8, **caractérisé en ce que** deux, trois ou quatre profilés (2) peuvent être assemblés l'un avec l'autre le long de leurs brides extérieures (8) au moyen d'un profilé d'assemblage (5.1 à 5.n) inséré entre les brides extérieures (8) des profilés (2) et réalisé comme profilé en caisson, profilé en L, profilé en T ou profilé en X, ledit profilé d'assemblage (5.1 à 5.n) étant conformé de manière à pouvoir être maintenu sans jeu ou avec un jeu réduit entre les brides extérieures (8) ou les traverses intérieures (12) et les traverses visibles (11) des profilés (2).

10. Agencement de présentation (1.1) selon la revendication 9, **caractérisé en ce que** la traverse centrale (6) d'au moins un des profilés (2) et/ou le profilé d'assemblage (5.1 à 5.n) sur sa face opposée à la traverse centrale (6) d'au moins un des profilés (2) sont pourvus d'au moins un trou oblong (29.1, 29.2) s'étendant en direction longitudinale, lequel s'élargit vers un cinquième alésage (30) à l'une de ses extrémités, et **en ce qu'**un tenon (31) est prévu, correspondant à un des trous oblongs (29.1, 29.2) sur la traverse centrale (6) d'au moins un des profilés (2) et/ou sur le profilé d'assemblage (5.1 à 5.n) sur sa face opposée à la traverse centrale (6) d'au moins un des profilés (2), lequel est dimensionné de manière à être ajusté dans le cinquième alésage (30) avant de pouvoir être inséré dans le trou oblong (29.1, 29.2) pour qu'il en résulte un assemblage amovible.
